# EUROPEAN PATENT APPLICATION

(11) **EP 4 810 917 A1**
(43) Date of publication of application: **23.09.2026**
(21) Application number: 26163865.4
(22) Date of filing: 11.03.2026
(51) Int. Cl.: G01C 21/36, G01C 21/00, G01C 21/28

(54) **METHOD FOR RECONSTRUCTING LANE LINES, CORRESPONDING SYSTEM AND VEHICLE**

(30) Priority: 18.03.2025 IT 202500005550
(71) Applicant: Stellantis Europe S.p.A., 10135 Torino (TO) (IT)
(72) Inventor: BORRELLO, GIULIO, 10135 TORINO (IT); ACERNESE, ANTONIO, 80038 POMIGLIANO D'ARCO (IT); GIRARDI, DELIA, 10135 TORINO (IT); LORUSSO, LUCA, 10135 TORINO (IT); TROTTA, ANTONINO, 10135 TORINO (IT)
(74) Representative: Stellantis Europe

(57) **Abstract**

Method (200) for reconstructing lane lines (814a, 814b) of a lane (814) along which a vehicle (10) is moving without computer vision apparatus, wherein the vehicle (10) includes a control system (100) comprising:
- a geolocation module (120) configured to locate the geographic position (820) of the vehicle, and
- a control unit (110) configured to receive output data from said geolocation module (120), and to access geographic indications (810; 811) of road segments (812) and lanes (814) into which the road segments (812) are divided;
said method (200) comprises performing, via said control system (100):
- acquiring (201), via said geolocation module (120), the coordinates of the current position (820) of the vehicle (10) in a geodetic reference system (800),
- determining (202) based on said position (820) whether the vehicle is on a road segment (812), or within a predetermined distance from a road segment (812).

## Description

### Field of the invention

The present invention relates to advanced driver assistance systems (ADAS) and autonomous driving (AD) systems.

### Prior art

Trajectory planning represents a particularly relevant aspect in the development cycle of ADAS/AD systems. In determining trajectories, ADAS/AD systems typically consider parameters such as movement constraints, vehicle dynamics models, driving scenarios, and the vehicle's Operational Design Domain (ODD).

In particular, the use of on-board cameras represents a crucial aspect of trajectory generation in ADAS/AD systems. Indeed, in such systems, images acquired by the camera allow the acquisition of visual references of the surrounding environment, such as road markings, road edges, and obstacles. Through computer vision techniques, key features are extracted in real time from the image, such as lane lines and reference points.

The use of data obtained via on-board cameras also allows for verifying the correct lateral positioning of the vehicle, maintaining a safe distance from obstacles, and adequately anticipating curves, and is particularly relevant because it provides information independent of other sensors used for planning, such as positioning sensors or LiDAR, thus offering an additional guarantee on the safety and reliability of the autonomous driving system.

However, in various scenarios, on-board cameras are not available. For example, in a development platform, the hardware and software necessary for controlling on-board cameras, or the associated artificial vision routines, might not be available as they are still under development, causing delays in the development of trajectory planning elaborated in the ADAS/AD system.

In other cases, atmospheric conditions that reduce visibility such as rain, fog, or snow, or cases where road surface conditions prevent correct recognition of road markings can prevent correct recognition of lane lines in the ADAS/AD system via on-board cameras.

Therefore, there is a need for a solution that serves as an alternative to on-board cameras for lane line recognition, thus enabling trajectory generation in the absence of computer vision apparatus, thereby allowing the development of trajectory planning systems independently from the development of computer vision modules. A further need is for a solution for reconstructing lane lines in cases where the visibility of road markings is compromised.

### Object and summary

The present solution aims to provide mechanisms for reconstructing lane lines in ADAS/AD systems in the absence of computer vision that overcome the problems of the prior art.

According to the present solution, this object is achieved by a control system comprising a control unit comprising in turn a processor, a system memory, and a non-volatile memory, a geolocation module, one or more systems for modifying the motion state of a vehicle under the control of trajectories generated by the ADAS/AD system, an ADAS/AD system configured to receive data indicative of lane lines and, based on this data, plan trajectories suitable for correcting the motion state of the vehicle via the one or more systems for controlling the motion state of the vehicle, and a system bus for interconnecting the geolocation module and the control unit, configured to allow the exchange of data indicative of lane lines between the control unit and the ADAS/AD system, the data indicative of lane lines being organized in one or more output messages.

According to the present solution, the control system implements a method for reconstructing lane lines of a lane along which a vehicle is moving in the absence of computer vision apparatus, comprising a first step of acquiring, via said geolocation module, the coordinates of the current position of the vehicle in a geodetic reference system and, based on this information, locating the vehicle on the map.

In a second step, determining based on said position whether the vehicle is on a road segment of said map, or within a predetermined distance from a road segment of said map. In the case where the determination has a positive response, the method comprises a step of determining based on said map and the current position of the vehicle, the position of the vehicle in said geodetic reference system relative to lanes of the road segment, and consequently determining a lane occupied by the vehicle, defining an area of interest for the reconstruction of lane lines, subsequently determining based on the position of the vehicle relative to the occupied lane coordinates, expressed in said geodetic reference system, of a plurality of points belonging to geometric boundaries of the lane in the area of interest, roto-translating said coordinates of a plurality of points from said geodetic reference system to a subjective reference system of a virtual camera, to obtain a plurality of translated points indicating the geometric boundaries of the occupied lane in said subjective reference system, and finally determining in said subjective reference system a plurality of lines indicating the geometric boundaries of the lane in the area of interest based on said plurality of translated points.

In the case where said determination has a negative response, the method comprises determining that no lane lines are detected.

Consequently sending an output message comprising an indication of said geometric boundaries of the lane if it is determined that the vehicle is on a road segment, or a null value if it is determined that the vehicle is not on a road segment, the output message being structured analogously to a message produced as output by a computer vision module configured to detect lane lines, so as to reconstruct the lines of the lane along which the vehicle is moving as would be seen by a camera oriented along a direction of travel of the vehicle, for example installed in a frontal area of the vehicle.

Finally, the present solution further relates to a vehicle comprising a control system for reconstructing image data of a second according to the solution described herein.

### Brief description of the figures

The invention will now be described with reference to the attached figures, provided by way of non-limiting example only, in which:
- Figure 1 shows a vehicle comprising a control system according to the solution described herein;
- Figure 2 shows a flow diagram of a method for reconstructing lane lines according to the solution described herein;
- Figure 3A shows a high-definition map indicating a road segment used for the reconstruction of lane lines according to the solution described herein;
- Figure 3B shows an illustrative graph of a strategy for sampling points according to a negative exponential function;
- Figure 4A shows a reconstruction of lane lines obtained in accordance with the solution described herein; and
- Figure 4B shows an example of representation of lane lines according to the solution described herein.

### Detailed description

In the following description, one or more specific details are illustrated, for the purpose of providing an in-depth understanding of examples of embodiments of this description. The embodiments can be obtained without one or more of the specific details or with other methods, components, materials, etc. In other cases, known operations, materials or structures are not illustrated or described in detail so that certain aspects of the embodiments are not obscured.

A reference to "an embodiment" within the framework of the present description is intended to indicate that a particular configuration, structure, or characteristic described with reference to the embodiment is comprised in at least one embodiment. Therefore, phrases such as "in one embodiment" that may be present in one or more points of the present description do not necessarily refer to the same embodiment.

Furthermore, particular configurations, structures or characteristics can be combined in any suitable way in one or more embodiments.

The references used here are provided merely for convenience and therefore do not define the scope of protection or the scope of the embodiments.

In the following, terms such as "first" and "second" are used to distinguish one element from another and not to indicate a sequential order, unless otherwise indicated.

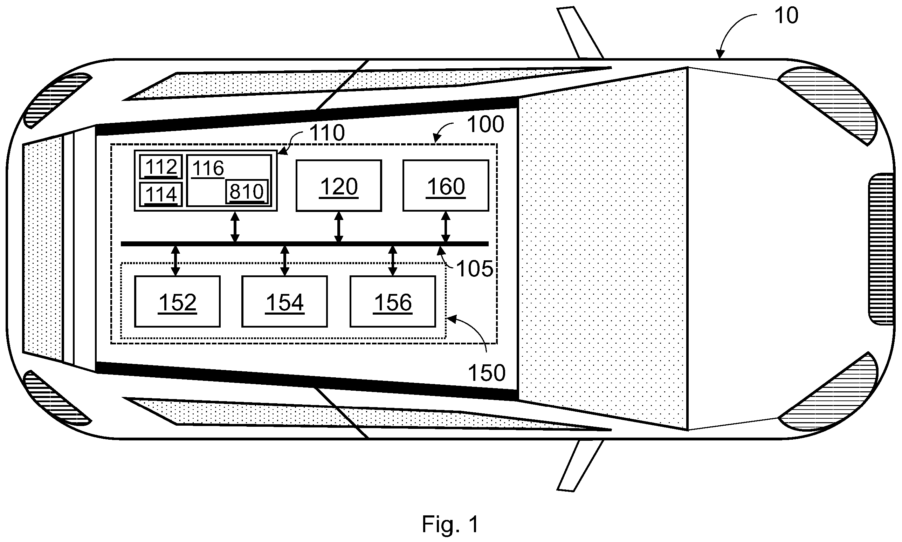

Figure 1 illustrates a vehicle 10 comprising a control system 100 for reconstructing lane lines of a lane along which the vehicle 10 is moving. In particular, the control system 100 is configured to reconstruct the lane lines such that they are represented from the point of view of a camera provided in the vehicle 10, potentially in the absence of computer vision apparatus provided on board said vehicle.

As illustrated, the control system 100 comprises a control unit 110, a geolocation module 120, and a system bus 105 for interconnecting the modules comprised in the control system 100 and/or further modules couplable to the control system 100. In particular, the system bus 105 is implemented via a CAN, CAN-FD, Automotive Ethernet, or LIN communication system.

The control system 100 further comprises a plurality of subsystems 150, which are usable in the vehicle 10 to control its motion state. The plurality of subsystems 150 is also coupled to the control unit 110 via the system bus 105.

In the example of Figure 1, the plurality of subsystems 150 comprises a power steering control module 152, a braking system control module 154, and a powertrain assembly control module 156. In this regard, the control unit 110 can receive, via the system bus 105, data and/or instructions originating from the plurality of subsystems 150 so as to acquire information indicative of the motion state of the vehicle 10.

The control system 100 further comprises an ADAS/AD system 160 for implementing driver assistance and/or autonomous driving routines to modify the motion state of the vehicle 10 based on data received from the control unit 110, from the geolocation module 120 and/or from further sensors or modules couplable to the control system 100.

Specifically, the ADAS/AD system 160 can generate trajectories that are employed to determine and/or correct the motion state of the vehicle 10. For this purpose, the ADAS/AD system 160 is coupled to the control unit 110 via the system bus 105, so as to allow the exchange of data and/or control instructions for the determination and/or correction of the motion state of the vehicle 10. For example, the ADAS/AD system 160 can determine trajectories based on one or more geographic positions, such as a starting position and a destination position, so as to implement autonomous driving routines in the vehicle 10.

In a further example, the ADAS/AD system 160 can implement a lane centering assist system, determining one or more trajectories comprising corrections to the motion state of the vehicle 10 which are consequently received by the control unit 110 and put into effect by sending control commands to the power steering control module 152, the braking system control module 154, and the powertrain assembly control module 156 via the system bus 105.

As will become clearer in the following of the present description, the control unit 110 is configured to transmit output messages 830 comprising information on lane lines of an area ahead of the vehicle 10, which are received by the ADAS/AD system 160 and are employed by it to perform the planning of one or more trajectories, such as the trajectories used for lane keeping, and consequently modify the motion state of the vehicle 10 based on the one or more planned trajectories.

The control unit 110 comprises a processor 112, a system memory 114, and a non-volatile memory 116, and is configured to execute a method 200 for reconstructing the lane lines of a portion of road ahead of the vehicle 10, which will be described in greater detail in the following of the present description. In particular, said method 200 for reconstructing lane lines is implemented via specific software code residing in the non-volatile memory 116 and executed by means of the processor 112 and the system memory 114.

In various embodiments, the geolocation module 120 is based on a differential satellite positioning and navigation system such as, for example, differential GPS (DGPS), differential Galileo, differential GLONASS, or differential BeiDou. The differential geolocation module 120 comprises a satellite receiver for receiving a plurality of signals from a constellation of satellites, a differential correction receiver for receiving position corrections from a fixed reference station, and a processing unit for calculating a position value based on the signals received from the constellation of satellites and the correction signal received from the fixed reference station.

As is well known, differential satellite positioning and navigation systems employ fixed reference stations to improve positioning accuracy. The fixed reference stations are positioned at locations having known coordinates and receive signals from the satellites, so as to compare their calculated position with their actual position and thus determine the errors in the positioning signals. Consequently, the reference stations transmit the error corrections to mobile receivers, i.e., for example the differential geolocation module 120, via radio signals, which in turn receive the corrections and apply them to the position calculations via their respective processing units, thus improving positioning accuracy.

The differential geolocation module 120 is therefore capable of detecting the position of the vehicle 10 with an accuracy superior to traditional geolocation, thanks to the use of the network of ground reference stations to correct the intrinsic errors in the standard signals, allowing centimeter-level accuracy in positioning.

In various embodiments, the non-volatile memory 116 of the control unit 110 comprises one or more high-definition maps 810, or HD maps 810, comprising highly detailed digital representations of the road environment. In particular, the high-definition maps 810 offer a level of detail on the order of centimeters and include information concerning road markings, road signs, street furniture, variations in road geometry such as slope, curvature and elevation, and semantic information about the environment.

Thanks to the synergistic use of the differential geolocation module 120 and the high-definition maps 810, the control system 100 can determine with high precision the position of the vehicle 10 relative to the features captured in the HD map 810, thus allowing precise localization of the vehicle 10 within the digital representation of the environment contained in the high-definition map 810.

In particular, this combination allows the detection of the position of the vehicle 10 within specific lanes, facilitating the prediction of upcoming road features before they are detected by other on-board sensors, allowing, for example, the ADAS/AD system 160 to make more informed driving decisions.

In various alternative embodiments, the non-volatile memory 116 comprised in the control unit 110 does not comprise any high-definition map 810, and the control system 100 is configured to locate the vehicle 10 within specific lanes by employing one or more test tracks 811 used in place of the high-definition maps 810.

A test track 811 comprises indications of one or more tracks 812 indicated by a plurality of points expressed in a geodetic reference system, in a manner analogous to how the tracks 812 are indicated in the high-definition maps 810. Compared to a high-definition map 810, in which the tracks 812 are derived based on cartographic data, the tracks 812 comprised in the test track 811 are tracks acquired via a geolocation module such as, for example, the geolocation module 120, and are provided in the test track 811 for the purpose of providing one or more tracks 812 to verify the operation of the control system 100, without the need to resort to high-definition maps 810.

Therefore, similarly to the data comprised in the high-definition maps 810, the test track 811 comprises information concerning geometric boundaries of lane lines 814 associated with the track 812 comprised therein.

In various embodiments, a test track 811 can be acquired via the control system 100. In this regard, the control system 100 can be configured to acquire one or more test tracks 811 comprising a track 812 indicated by a plurality of coordinates expressed in a geodetic reference system, which are acquired via the differential geolocation module 120, and one or more lane lines 814 associated with the track, which are determined based on the track 812 acquired via geometric transformations performed by the control unit 110.

In particular, the control system 100 can acquire a plurality of points, indicated by respective coordinates in the geodetic reference system, and consequently based on the acquired points indicating the track 812, determine the geometric boundaries of one or more lane lines by applying a translation, starting from the track 812, for the determination of each lane line 814, under the assumption that the relative position of the vehicle 10 with respect to the lane lines 814, and the width of the roadway of the road traveled by the vehicle 10 are known.

For example, in various embodiments wherein the plurality of points of the test track 811 is acquired via the geolocation module 120 under the assumption that the vehicle 10 is following the centerline of a road, which separates the roadway into two lanes of equal width. In this case, the control system 100 reconstructs the geometric boundaries of each lane 814 based on a predetermined roadway width CL, which is divided into two equal parts to determine the width of each lane 814, which will therefore be equal to half the roadway width CL, i.e., CL/2. Consequently, the control system 100 adds translated copies of the track 812 recorded via the geolocation module 120, so as to thereby define the geometric boundaries of each lane 814, positioning a translated copy to the left of the track 812, thereby determining a first lane comprised between a first roadway line and the centerline, and positioning a translated copy of the track 812 to the right of the track 812, thereby defining a second lane comprised between the centerline and a second roadway line.

In a further example, wherein a roadway comprises more than two lanes, as in the case of a highway, the control system 100 divides the predetermined roadway width CL into a desired number of lanes 814, wherein each lane has the same width, and consequently creating translated copies of the path 812 acquired via the geolocation module 120 so as to define the geometric boundaries of each lane 814.

Subsequently, the geometric boundaries of each lane 814 are stored in the test track 811. In this way, it is possible to store in the control system 100 one or more test tracks 811 comprising indications of lane lines 814, which can be used to perform tests on the control system 100, in the absence of high-definition maps 810 and, in general, of computer vision. Therefore, in the absence of high-definition maps 810 it is possible to store a test track 811 in the control system 100, to allow the reconstruction of lane lines along a path, indicated by the acquired track 812 and comprised in the test track 811.

As anticipated, the control system 100 allows reconstructing one or more lane lines of a road traveled by the vehicle 10 in the absence of computer vision, or under conditions of limited visibility. In this regard, the control system 100, and in particular the control unit 110, implements the method 200 for reconstructing the lane lines of a portion of road ahead of the vehicle 10 mentioned previously.

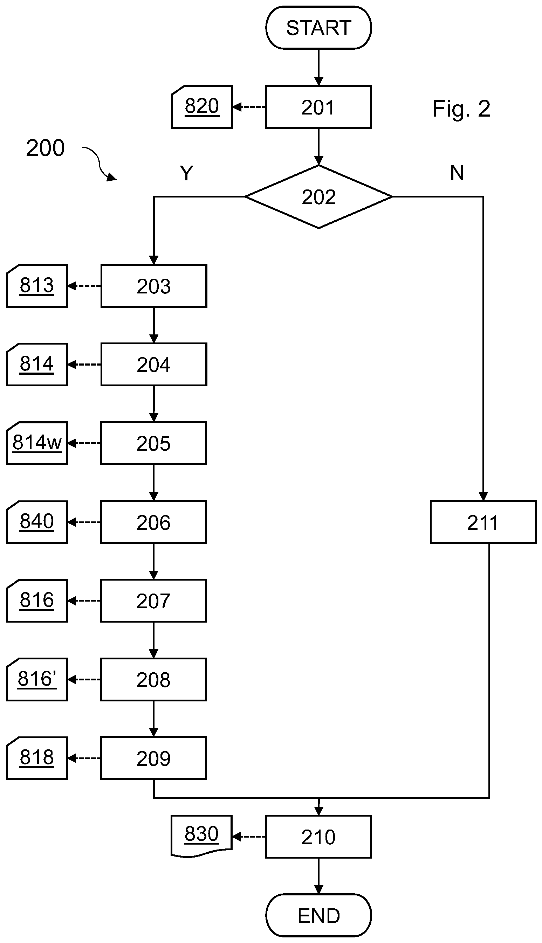

Figure 2 illustrates a flow diagram representing the method 200 for reconstructing lane lines.

After a start step, in a first phase 201 the control system 100 acquires a position value 820 of the vehicle 10 via the differential geolocation module 120. In particular, the position value 820 is indicated by coordinates expressed in a geodetic reference system 800 such as, for example, a pair of values xᵥ and yᵥ, and an orientation value such as, for example, an angle expressed in the same geodetic reference system 800. Consequently, based on the position value 820, the control system 100 locates the vehicle 10 on the high-definition map 810 or on the test track 811.

Subsequently, in a phase 202 the control system 100 determines, based on the position value 820 found previously, whether the vehicle is on a track 812 indicated in the high-definition map 810 or in the test track 811, or whether it is in proximity to a track 812 indicated in the high-definition map 810 or in the test track 811. In this regard, the control system 100 can determine that the vehicle 10 is in proximity to a track 812 if the position value 820 determined in the previous phase 201 has a distance from the nearest track 812 less than a predetermined threshold value.

In the negative case, in a phase 211 the control system 100 determines that the vehicle 10 is neither on a track 812 such as, for example, a road or a road intersection, nor in proximity to a track 812, and therefore stores in the system memory 114 a null value indicating a failure to detect lane lines.

On the contrary, in response to determining that the vehicle 10 is on a track 812, or in proximity to a track 812, comprised in the high-definition map 810 or in the test track 811, the control system 100 continues the execution of the method 200 in a phase 203, wherein it determines the coordinates of a point 813 placed between the vehicle 10 and the track 812 having the minimum distance from the two. Similarly to the position value 820, the point 813 having the minimum distance from the vehicle 10 and the track 812 is indicated using a pair of coordinates referenced to the geodetic system 800, and is consequently stored in the system memory 114.

Subsequently, in a phase 204 the control system 100 determines, based on the first position value 820, the point 813 having the minimum distance between the vehicle 10 and the track 812, and the high-definition maps 810 or the test track 811, a position of the vehicle 10 in the geodetic reference system 800 relative to the lanes of the track 812, to consequently determine a lane occupied 814 by the vehicle.

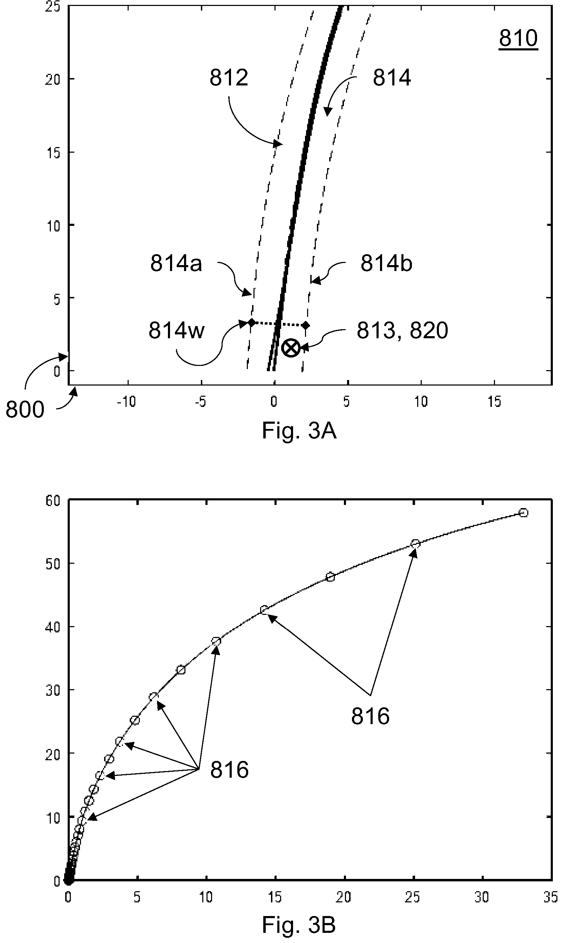

In this regard, Figure 3A is illustrative of an example of a high-definition map 810 referenced to a geodetic reference system 800, wherein the lanes are indicated on the high-definition map 810 by a pair of lane lines comprising a first lane line 814a and a second lane line 814b, which delimit their geometric boundaries. Furthermore, in Figure 3A the point 813 having the minimum distance from the vehicle position 820 and the track 812 is shown, which is determined in the previous phase 203, together with the vehicle position 820.

Therefore, to determine the lane occupied 814 by the vehicle 10, the control system 100 verifies whether the position 820 of the vehicle 10 is comprised between the first lane line 814a and the second lane line 814b that define a specific lane.

In various embodiments the control system 100 is configured to determine further lanes 814 adjacent to the lane 814 traversed by the vehicle 10, consequent to the detection of the lane 814 traversed by the vehicle 10, by executing a procedure analogous to that performed for the detection of the lane 814 traversed by the vehicle 10. For example, the control system 100 can detect the presence of a second lane 814' positioned to the right of the lane 814 traversed by the vehicle 10, and of a third lane 814" positioned to the left of the lane 814 traversed by the vehicle 10, detecting their presence on the high-definition map 810. In a further example, the control system 100 can detect the presence of a second lane 814' adjacent to the lane 814 traversed by the vehicle 10 by detecting its presence in a test track 811.

In response to determining the further lanes 814' and 814" adjacent to the traversed lane 814, the control system determines the geometric boundaries of the second lane 814', which correspond to the first lane line 814a and a third lane line 814c, and the geometric boundaries of the third lane 814", which correspond to the second lane line 814b and a fourth lane line 814d.

Subsequently, in a phase 205, the control system 100 determines a width value 814w of the lane 814 occupied by the vehicle 10 based on the high-definition maps 810, or the test track 811, and the occupied lane 814 detected in the previous phase.

For example, the control system 100 can determine the width 814w of a lane occupied by the vehicle 10 by measuring the length of a segment passing through the position 820 of the vehicle 10, expressed as a pair or triple of coordinates on the high-definition map 810 or on the test track 811, and which intersects the first lane line 814a and the second lane line 814b, which together delimit the lane occupied by the vehicle 10 and are indicated on the high-definition map 810 or on the test track 811.

Subsequently, in a phase 206 the control system 100 defines an area of interest 840, i.e., a portion of the high-definition map 810 or of the test track 811, for the reconstruction of lane lines comprising the lane lines 814a and 814b. The control system 100 defines the area of interest 840 for the reconstruction of lane lines so as to cover an area equivalent to that of an on-board camera installed in the vehicle 10 and used, associated with computer vision procedures, for the operation of the ADAS/AD subsystems.

In particular, in phase 206 the control system 100 defines an area of interest 840 within which to consider the HD map 810 or the prerecorded track 811, designating an area positioned ahead of the vehicle 10 comprising a portion of space in which the vehicle 10 is moving. For example, while the vehicle 10 is traveling at sustained speed, a region of interest 840 can be a rectangular area 10 m wide and 70 m long.

In other words, the definition of an area of interest 840 establishes on the high-definition map 810, or on the test track 811, limits of an equivalent image based on which the reconstruction of information concerning the lane lines is performed. For example, the control system 100 can define a field of view, determined by a viewing angle, and based on said viewing angle define an area, preferably within a rectangle, within which to perform the reconstruction of lane lines. This allows the control system 100 to reconstruct information concerning the lane lines and present the results, i.e., the reconstructed lanes, in a manner analogous to the results produced by a system capable of detecting lane lines based on a plurality of images acquired via a camera installed in the vehicle and processed via computer vision routines.

In the present phase 206, the control system 100 further defines a field of view value FV and a visibility distance value DV based on the dimensions of the area of interest 840 defined on the high-definition map 810 or on the test track 811.

Once the area within which to perform the reconstruction of lane lines is defined, the control system 100 acquires in a phase 207 one or more coordinate values, expressed in the geodetic reference system 800 used previously, indicating a plurality of points 816 belonging to the geometric boundaries of the lane in which the vehicle 10 is located, therefore defined by the first lane line 814a and the second lane line 814b, and comprised in the portion delimited by the area of interest 840 on the high-definition map 810 or on the test track 811. Therefore, the points 816 are acquired from the high-definition map 810 or from the test track 811, in particular from the occupied lane 814 for each lane line that delimits the occupied lane 814. In the exemplary embodiment considered, the points 816 are acquired for the first lane line 814a, and for the second lane line 814b.

Furthermore, in various embodiments the plurality of points 816 is also acquired for the lane lines that delimit any lanes adjacent to the occupied lane 814, such as for example the second lane 814" and the third lane 814", respectively delimited by the first lane line 814a and the third lane line 814c, and by the second lane line 814b and the fourth lane line 814d.

Specifically, for each lane line a plurality of points 816 is acquired so as to allow the determination of a function passing through these points. Therefore, the present phase 207 of acquiring a plurality of points 816 is repeated as many times as the number of detected lane lines.

In particular, the control system 100 performs the sampling of the points 816 belonging to the lane lines 814a, 814b, etc., considering one lane line at a time. Typically, the lane lines 814 as expressed in the high-definition maps 810 or in the test track 811 comprise a high number of points, in order to offer high resolution. For example, in an area of interest 840 70 m long, the lane lines 814 can comprise at least 500 points expressed as coordinate pairs in the geodetic reference system 800.

In accordance with various embodiments of the solution described herein, to emulate the behavior of a computer vision module it is necessary to determine a polynomial for each lane line 814 within the region of interest 840, capable of describing the line. For this purpose, the high number of points of the lane lines 814 comprised in the area of interest 840 proves impractical, especially in light of the fact that the calculations necessary for determining the one or more polynomials need to be executed in real time and cyclically, while the vehicle 10 is moving. Therefore, it is crucial to maintain a number of points 816 such that the determination of one or more polynomials based on these points is not too computationally expensive.

For this purpose, the control system 100 performs in phase 207 a sampling on the lane lines 814, to obtain a plurality of points 816, following a predefined strategy to select a subset of sampled points 816 comprised in the plurality of points forming the lane lines 814. With reference to an example described previously, in which the area of interest 840 defined on the high-definition map or on the test track 811 comprises 500 points forming the lane lines 814, the sampling allows selecting 50 points and consequently storing them in a plurality of sampled points 816.

In various embodiments, each plurality of points 816 can be acquired according to different sampling strategies.

For example, the sampling of the plurality of points 816 can be performed such that the corresponding plurality of sampled points 816 is distributed, relative to the distance from the vehicle 10, according to a negative exponential distribution. In this way, the sampled points 816 are acquired in greater quantity in the vicinity of the vehicle 10, and in lesser quantity as the distance from the vehicle 10 increases.

In a further example, the sampling of the plurality of points 816 can be performed following a linear distribution of samples. In this way, each point in the resulting plurality of sampled points 816 is separated by the same distance from the previous point and the next point.

For example, following the sampling strategy according to the negative exponential distribution, high accuracy of the interpolating polynomial 818 can be obtained in the portion of the area of interest 840 closest to the vehicle 10, while lower accuracy is obtained in the portion of the area of interest farthest away. Differently, adopting a linear-type sampling strategy, a resulting polynomial 818 can be obtained capable of approximating the lane line 814 with average accuracy.

Naturally, in accordance with the solution described herein it is possible to implement different sampling strategies from those described above. For example, in a scenario requiring lane line detection under high-speed conditions, it is possible to implement a sampling strategy such that the control system 100 collects a higher number of sampled points 816 in the final part of the lane line 814.

In further examples, it is possible to use a discrete sampling strategy not based on mathematical functions or a dynamic sampling strategy that varies based on the speed of the vehicle can be implemented.

In particular, in an example wherein the plurality of sampled points 816 is acquired according to a negative exponential distribution, the points 816 are sampled from a lane line 814 as a function of the distance D of each point from the vehicle position 820. In particular, the distance D of each acquired point is proportional to a negative exponential function *e^{-Nx},* wherein the parameter N is an integer, while the parameter x determines a predetermined number of points to be acquired and is comprised in a predetermined interval.

Specifically, to perform the sampling the control system 100 determines an interval of values for the parameter x, having for example 0 and 1 as extremes, consequently discretizes this interval into the predetermined number of points to be acquired such that they are equidistant from each other. In an exemplary embodiment, the parameter x is a vector comprising 9 equidistant values between 0 and 1, x = [0; 0.125; 0.25; 0.375; 0.5; 0.625; 0.75; 0.875; 1], and is used to acquire a plurality of points 816 belonging to a first lane line 814a having a length L equal to 500 m, which is determined based on the high-definition map 810 and the area of interest 840, which defines the portion of the track 812 intended to be acquired.

Subsequently, the control system 100 performs the sampling of the plurality of points 816, acquiring the points belonging to the first lane line 814a based on the distance D from the vehicle position 820, in accordance with what is described above. In particular, the points 816 having a distance D equal to *L · e^{-Nx}* are acquired, which in the considered example are therefore the points having the following distances, expressed in meters relative to the vehicle position 820: D = [500.000; 208.431; 86.887; 36.220; 15.099; 6.294; 2.624; 1.094; 0.456].

Subsequently, the plurality of sampled points 816 belonging to the first lane line 814a are stored in the system memory 114 for subsequent processing. Consequently, the control system 100 performs the sampling from the plurality of points belonging to the second lane line 814b, obtaining a corresponding plurality of sampled points 816 and consequently storing the sampled points 816 in the system memory 114 to allow their real-time processing. If further lane lines are present, for example belonging to lanes adjacent to the lane 814 traveled by the vehicle 10, such as the second lane 814' and the third lane 814", the control system 100 performs the sampling of the plurality of points 816 also for the further detected lane lines such as, for example, the third lane line 814c and the fourth lane line 814d.

In other words, the control system 100 samples a predetermined number of points 816 for each lane line, selecting each point 816 based on the distance D relative to the position 820 of the vehicle 10, in particular according to the trend of a negative exponential function. This sampling strategy advantageously allows obtaining a high number of points corresponding to the portions of the lane lines closest to the vehicle 10, and obtaining fewer points corresponding to the more distant portions, thus facilitating obtaining a more accurate fitting of the lane lines in proximity to the vehicle 10, while ensuring continuity of the resulting curve and, conversely, tolerating a greater error at points farther from the vehicle.

In this regard, Figure 3B illustrates a possible example of such a sampling strategy, summarized in a graph representing a lane line, such as a first lane line 814a or a second lane line 814b, wherein the sampled points 816 are marked by an 'o' sign. In the graph, it is possible to observe that the points 816 closest to the position 820 of the vehicle, which is placed at the origin of the graph, i.e., at coordinates (0; 0), are sampled with greater frequency, and as the distance from the vehicle position 820 increases, the points 816 are more spaced apart from each other, in accordance with the trend defined by the negative exponential function.

From this example it is evident that this sampling strategy allows obtaining a high number of points to describe a curve indicative of a lane line in the vicinity of the vehicle, thus facilitating obtaining an interpolating polynomial passing through the plurality of points 816 capable of representing with sufficient accuracy the portion of lane line 814 closest to the vehicle 10.

Subsequently, in a phase 208 the control system 100 performs a roto-translation transformation of the pluralities of points 816 so as to transform these points, expressed in the geodetic reference system 800, into pluralities of corresponding translated points 816', expressed in a camera reference system 850. In particular, the new reference system, i.e., the camera reference system 850, towards which the roto-translation is performed allows the representation of the space surrounding the vehicle 10 as if seen by a camera installed in a frontal area of the vehicle 10.

In other words, the control system 100 transforms via a roto-translation the coordinates of the pluralities of points 816 expressed in the geodetic reference system 800 into coordinates of pluralities of translated points 816' expressed in the camera reference system 850 of a virtual camera.

In this way each point of the plurality of points 816, which is represented by a pair or triple of coordinates in the geodetic reference system 800, is associated with a respective translated point 816' represented in the camera reference system 850, thus obtaining a plurality of translated points 816'. For example, the roto-translation of the points 816 to obtain the translated points 816' can be performed via a predetermined roto-translation matrix, which is applied to the coordinates of each point 816 and returns the coordinates of respective points 816' expressed in the camera reference system 850.

The roto-translation transformation is performed for each plurality of points 816 associated with a respective line of a lane 814, thus obtaining a plurality of translated points 816' for each lane line such as, for example the first lane line 814a, the second lane line 814b, the third lane line 814c, or the fourth lane line 814d.

Subsequently, in a phase 209 the control system 100 performs a polynomial interpolation based on the plurality of translated points 816' found via the roto-translation, to determine a polynomial 818 representing the curves of the lane lines within which the vehicle 10 is moving. Specifically, the control system 100 executes a polynomial interpolation algorithm that receives as input each translated point 816' belonging to the lane lines 814a and 814b expressed in the camera reference system 850, and produces as output a first interpolating polynomial 818a corresponding to the first lane line 814a, and a second interpolating polynomial 818b corresponding to the second lane line 814b.

In other words, the control system 100 performs a polynomial fitting to obtain a geometric description 818 of the lane lines 814 based on the sampled and roto-translated points 816'. Based on the adopted sampling strategy, the interpolating polynomial 818 represents more or less accurately some parts of the corresponding lane line 814.

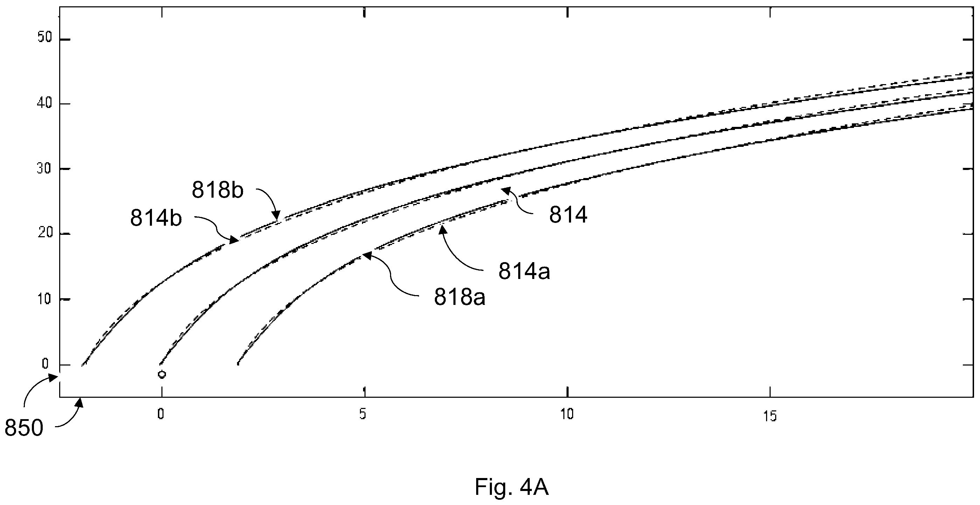

In this regard, Figure 4A shows a schematic view of the lane lines 814a and 814b seen from the camera's point of view, therefore expressed in the camera reference system 850, and of the corresponding interpolating polynomials 818a and 818b. In particular, the lane lines 814a and 814b are represented as dashed lines, while the corresponding interpolating polynomials 818a and 818b, obtained respectively via the interpolation of the points 816' of the first lane line 814a and the second lane line 814b are represented by continuous lines.

As observed previously, the adopted sampling strategy for points 816 advantageously allows reducing the approximation error introduced by the interpolation at points closest to the vehicle's position, so as to obtain a more faithful representation of the portions of lane line closest to the vehicle 10, while simultaneously admitting a greater, more tolerable error in the representation of the portions of lane line farther from the vehicle 10.

In various embodiments, the interpolating polynomials 818 used to describe the lane lines in the control system 100 are third-degree polynomials. In particular, an interpolating polynomial 818 of this type can be generically expressed according to the equation y = *C'*₀ + *C*₁*x* + *C*₂*x*² + *C*₃*x*³.

Therefore, the polynomial interpolation algorithm applied to the translated points 816' determines the coefficients C₀, C₁, C₂, and C₃ that define the polynomial 818, determining for example a first polynomial 818a corresponding to the first lane line 814a, and a second polynomial 818b corresponding to the second lane line 814b.

A further example of a third-degree interpolating polynomial 818 can be expressed in the form: $y = {d}_{y} + tan \left(ψ\right) x + \frac{κ}{2} {x}^{2} + \frac{κ ′}{6} {x}^{3}$

As shown in such a third-degree polynomial 818, the coefficient C₀ corresponds to a lateral displacement parameter d_{y}, the coefficient C₁ corresponds to the tangent of a heading angle Ψ (vehicle orientation), while the coefficients C₂ and C₃ are respectively proportional to a curvature parameter κ and to the first derivative of said curvature parameter κ'.

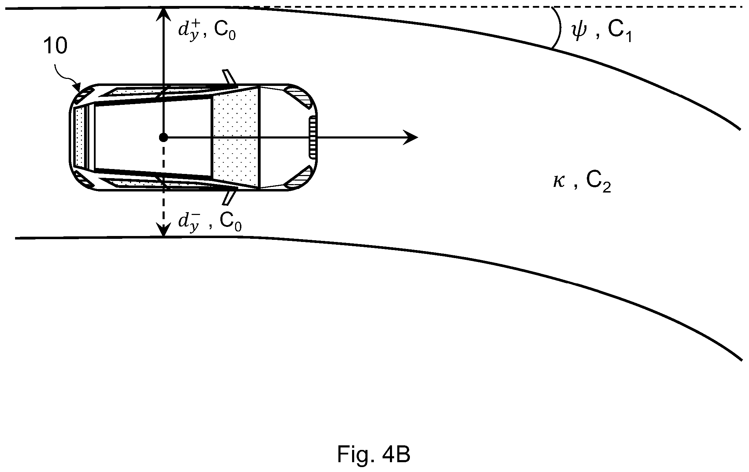

In this regard, Figure 4B illustrates a graphical example of the use of such parameters for the representation of lane lines, wherein the vehicle 10 is depicted while moving within a lane 814, delimited by the lane lines 814a and 814b, which are expressed using the parameters described above.

Alternatively, it is possible to represent the lane lines 814 via polynomials 818 of a different degree. For example, it is possible to represent the lane lines 814 via a second-degree polynomial 818 y = *C*₀ + *C*₁*x* + *C*₂*x*².

Subsequently, in a phase 210 the control system forms an output message 830 comprising the data representing the lane lines 814 reconstructed in the previous phases, i.e., the coefficients of the interpolating polynomials 818.

In particular, if during the execution of the method 200, specifically the phase 202 of determining whether the position 820 of the vehicle 10 is proximate to a track 812, the output message 830 comprises a first polynomial 818a and a second polynomial 818b, which represent respectively the first lane line 814a and the second lane line 814b. On the contrary, if in phase 202 it is determined that the position 820 of the vehicle 10 is not close to any track 812, the generated output message 830 does not comprise any curve representing lane lines.

In various embodiments, the output message 830 can be a CAN, CAN-FD, or Automotive Ethernet packet, depending on the type of system bus 105 adopted. The output packet 830 can therefore comprise one or more CAN, CAN-FD, or Automotive Ethernet frames to allow the transmission of data in the control system 100.

The output message 830 is structured analogously to an output message generated by a computer vision module comprising one or more cameras and a control unit configured to detect lane lines from the images captured by the cameras, so as to be readable by the ADAS/AD system 160, which can thus employ the data comprised in the output message 830 for determining the trajectories of the vehicle 10. In this way, the control system 100 can be used in place of said computer vision module, for example in the case of a test vehicle where the computer vision module is not available but there is a need to develop and test the ADAS/AD system 160.

In particular, in various embodiments the output message 830 comprises the first polynomial 818a, and the second polynomial 818b which are, for example, expressed via the coefficients C₀, C₁, C₂, and C₃.

In addition, the output message 830 can also comprise further polynomials 818 indicative of further lane lines 814 detected in the previous phases, which represent lanes adjacent to the lane traveled by the vehicle 10, such as for example a third polynomial 818c, and a fourth polynomial 818d associated respectively with the third lane line 814c and the fourth lane line 814d, indicating geometric boundaries of lanes adjacent to the lane 814 occupied by the vehicle.

In various embodiments, the output message 830 further comprises a first existence probability value P1 associated with the first polynomial 818a, and a second existence probability value P2, indicative respectively of estimated existence probabilities for the first lane line 814a and the second lane line 814b, so as to provide data analogous to that contained in an output message transmitted by a computer vision module for detecting lane lines. In this regard, the first probability value P1 and the second probability value P2 can be predetermined and constant, for example equal to 1. Furthermore, the output message 830 can comprise further existence probability values associated with lanes adjacent to the lane 814 occupied by the vehicle 10.

Optionally, the output message 830 can comprise further information concerning the reconstructed lane lines such as, for example, a line type value, indicating whether a lane line is continuous, or discontinuous, and a line color value, indicating the color of the lane line, for example white, yellow, or blue.

Consequently, the control system 100 transmits the output message 830 via the system bus 105, so that it can be received by further modules coupled to the system bus 105 such as, for example, the ADAS/AD system 160, and/or by further systems provided externally to the control system 100. In this way, the ADAS/AD system 160 can receive data indicative of the lane lines, comprised in the output message 830, without substantial differences compared to receiving such data from a computer vision module comprising a camera, so as to execute trajectory planning and consequently modify the motion state of the vehicle 10.

In light of the above, it is evident that the solution described herein advantageously allows the reconstruction of lane lines in the absence of computer vision apparatus, facilitating trajectory planning in an ADAS/AD module 160 in the absence of visibility and/or under conditions of reduced visibility.

In various scenarios, the solution described herein for reconstructing lane lines can also be employed for validating information indicating lane lines obtained via a computer vision module, allowing for example to have feedback on the performance of said computer vision module.

It will be apparent from the foregoing that the control system according to the solution described herein allows the determination via reconstruction of lane lines, advantageously permitting the determination of trajectories based on the data indicative of the lane lines even in the absence of computer vision apparatus or under conditions of reduced visibility that can compromise correct detection of lane lines by the computer vision apparatus.

Naturally, the principle of the invention remaining the same, the details of construction and the embodiments of the control system may be widely varied with respect to what has been described and illustrated, purely by way of non-limiting example, without thereby departing from the scope of the present solution. The scope of protection is defined by the attached claims.

## Claims

1. Method (200) for reconstructing lane lines (814a, 814b) of a lane (814) along which a vehicle (10) is moving in the absence of computer vision apparatus, wherein the vehicle (10) includes a control system (100) comprising:
- a geolocation module (120) configured to locate the geographic position (820) of the vehicle, and
- a control unit (110) configured to receive output data from said geolocation module (120), and to access geographic indications (810; 811) of road segments (812) and of lanes (814) into which the road segments (812) are divided;
and wherein said method (200) comprises performing, via said control system (100), the steps of:
- acquiring (201), via said geolocation module (120), the coordinates of the current position (820) of the vehicle (10) in a geodetic reference system (800),
- determining (202) based on said position (820) whether the vehicle is on a road segment (812), or within a predetermined distance from a road segment (812),
in the case where said determination (202) has a positive response, proceeding with the following steps:
- determining (204) based on said geographic indications (810; 811) and the current position of the vehicle (820), the position of the vehicle in said geodetic reference system (800) relative to lanes of the road segment (812), and consequently determining a lane occupied (814) by the vehicle (10),
- defining (206) an area of interest (840) for the reconstruction of lane lines (814a, 814b),
- determining (207) based on the position of the vehicle (820) relative to the occupied lane (814) coordinates, expressed in said geodetic reference system (800), of a plurality of points (816) belonging to geometric boundaries (814a, 814b) of the lane (814) in the area of interest (840),
- roto-translating (208) said coordinates of a plurality of points (816) from said geodetic reference system (800) to a subjective reference system of a virtual camera (850), to obtain a plurality of translated points (816') indicating the geometric boundaries (814a, 814b) of the occupied lane (814) in said subjective reference system (850), and
- determining (209) in said subjective reference system (850) a plurality of lines (818a, 818b) indicating the geometric boundaries (814a, 814b) of the lane in the area of interest (840) based on said plurality of translated points (816');
in the case where said determination (202) has a negative response, determining (211) that no lane lines are detected; and
- sending (210) an output message (830) comprising an indication of said geometric boundaries (818a, 818b) of the lane (814) if it is determined (202) that the vehicle (10) is on a road segment (812), or a null value if it is determined (202) that the vehicle (10) is not on a road segment (812), the output message (830) being structured analogously to a message produced as output by a computer vision module configured to detect lane lines.

2. Method (200) according to claim 1, wherein said step of determining (209) in the camera reference system (850) a plurality of lines (818) based on said plurality of translated points (816') is performed by applying a polynomial interpolation algorithm to the plurality of translated points (816') expressed in the camera reference system (850), and wherein said boundaries (818a, 818b) of the lane are indicated by polynomials, preferably third-degree polynomials.

3. Method (200) according to claim 1 or 2, wherein: said step of determining (204) the position of the vehicle relative to lanes of the road segment (812), and consequently determining a lane occupied (814) by the vehicle (10) further comprises determining, based on the occupied lane (814) and said geographic indications (810; 811), the presence of one or more lanes (814', 814") adjacent to the lane occupied (814) by the vehicle (10),
said step of determining (207) a plurality of points (816) belonging to geometric boundaries (814a, 814b) of the lane (814) further comprises determining a plurality of points (816) belonging to geometric boundaries (814a, 814b, 814c, 814d) of the lanes adjacent (814', 814") to the occupied lane (814),
said step of roto-translating (208) said coordinates of a plurality of points (816) from said geodetic reference system (800) to a subjective reference system of a virtual camera (850), comprises applying said roto-translation transformation to the plurality of points (816) indicating the geometric boundaries (814a, 814b, 814c, 814d) of the lanes adjacent (814', 814") to the occupied lane (814),
said step of determining (209) in said subjective reference system (850) a plurality of lines (818a, 818b) indicating the geometric boundaries (814a, 814b) of the lane further comprises determining a plurality of lines (818c, 818d) indicating geometric boundaries (814a, 814b, 814c, 814d) of the lanes adjacent (814', 814") to the occupied lane (814) based on the respective plurality of translated points (816') found, and
said step of sending (210) an output message (830) comprising an indication of said geometric boundaries (818a, 818b) of the lane (814) further comprises sending in the same output message (830) indications of the geometric boundaries (818a, 818b, 818c, 818d) of the lanes adjacent (814', 814") to the occupied lane (814).

4. Method (200) according to any one of the preceding claims, comprising the steps of:
- determining (203) the coordinates of the closest point (813) between the vehicle (10) and the road segment (812), and
- determining (205) a width value (814w) of the lane occupied (814) by the vehicle (10); wherein said step of defining (206) an area of interest (840) for the reconstruction of lane lines (814a, 814b) comprises determining based on the dimensions of said area of interest (840) a field of view value (FV) and a visibility distance value (DV), and
wherein in said step of sending (210) an output message (830) the output message (830) comprises said field of view (FV) and visibility distance (DV) values.

5. Method (200) according to any one of the preceding claims, wherein in said step of determining (207) coordinates of a plurality of points (816) belonging to geometric boundaries of the lane (814) in the area of interest (840), the points (816) are acquired based on the distance from the vehicle position (820) following the trend of a negative exponential function.

6. Method (200) according to any one of the preceding claims, wherein in said step of acquiring (201) via said geolocation module (120) the coordinates of the current position (820) of the vehicle in a geodetic reference system (800) and locating the vehicle on a map (810) is performed via a differential-type geolocation module (120).

7. Method (200) according to any one of the preceding claims, wherein said geographic indications (810; 811) comprising indications of road segments (812) and lanes (814) are high-definition maps (810) stored in a non-volatile memory (116) of said control system (100).

8. Method (200) according to claim 6, wherein said geographic indications (810; 811) comprising indications of road segments (812) and lanes (814) are test tracks (811) comprising data acquired via a differential-type geolocation module (120), wherein said road segments (812) are obtained by storing data obtained from said differential-type geolocation module (120), and wherein said lane indications (814) are obtained based on said road segments via geometric transformations.

9. Control system (100) for reconstructing lane lines (814a, 814b) of a lane (814) along which a vehicle (10) is moving in the absence of computer vision apparatus, comprising:
- a control unit (110) comprising a processor (112), a system memory (114), and a non-volatile memory (116), and being configured to implement the method (200) for reconstructing lane lines (814a, 814b) according to any one of claims 1 to 8,
- a geolocation module (120),
- an ADAS/AD system (160) configured to receive data indicative of lane lines (818a, 818b; 818c, 818d) and, based on said data, plan trajectories suitable for correcting the motion state of the vehicle (10) via the one or more systems (150) for controlling the motion state of the vehicle (10),
- one or more systems (150) for modifying the motion state of the vehicle (10) under the control of trajectories generated by the ADAS/AD system (160),
- a system bus (105) for interconnecting the geolocation module (120) and the control unit (110), configured to allow the exchange of data indicative of lane lines (818a, 818b; 818c, 818d) between the control unit (110) and the ADAS/AD system (160), the data indicative of lane lines (818a, 818b; 818c, 818d) being organized in one or more output messages (830).

10. Vehicle (10) comprising a control system (100) for reconstructing image data of a lane in which it is moving according to claim 9.
